# FASCICULE DE BREVET EUROPEEN

(11) **EP 1 645 482 B1**
(45) Date de publication et mention de la délivrance du brevet: **29.08.2007**
(21) Numéro de dépôt: 05292071.7
(22) Date de dépôt: 04.10.2005
(51) Int. Cl.: B60W 10/10

(54) **Système de commande palliatif d'une boîte de vitesses manuelle, dite robotisée à rapports étagés, pour véhicule automobile et procédé correspondant**
Palliatives Steuerungssystem für ein automatisiertes Handschaltgetriebe, sogenanntes automatisiertes Stufenschaltgetriebe, für ein Kraftfahrzeug und entsprechendes Verfahren
Palliative control system for an automatic manual gearbox, said automatic stepped transmission, for vehicle and corresponding method

(30) Priorité: 04.10.2004 FR 0410454
(43) Date de publication de la demande: 12.04.2006
(73) Titulaire: RENAULT s.a.s., 92100 Boulogne Billancourt (FR)
(72) Inventeur: Desreumaux, Laurent, 92210 Saint-Cloud (FR); Pacary, Jean-Christophe, 78180 Montigny le Bretonneux (FR)

(56) Documents cités:
- EP-A- 0 578 398
- EP-A- 0 873 902
- US-A1- 2003 228 954

## Description

L'invention concerne la sécurisation d'un embrayage commandé hydrauliquement défaillant.

L'invention s'applique avantageusement, mais non limitativement, à des transmissions dites robotisées à rapports étagés d'un véhicule automobile.

Classiquement, sur un véhicule automobile équipé d'une transmission dite robotisée et d'un système d'embrayage commandé hydrauliquement, les défaillances de cette commande, par exemple une fuite, qui conduisent à la non-ouverture du système d'embrayage ne peuvent être détectées de manière directe par le bloc de calcul commandant le système d'embrayage.

Par suite, lors d'un changement de rapport demandé par le conducteur, le rapport initial va être désengagé. Mais sans système palliatif, le véhicule automobile ne pourra pas, du fait de l'absence d'ouverture effective du système d'embrayage, engager de nouveaux rapports ni revenir au rapport initial.

Ainsi, la défaillance n'ayant pas été anticipée, le véhicule automobile va se retrouver en roue libre, sans rapport engagé dans la boîte de vitesses, sans possibilité d'accélérer et sans frein-moteur, ce qui dans certaines circonstances, telles que le dépassement d'un autre véhicule ou la circulation en montagne, peut conduire à des situations dangereuses, notamment si la vitesse du véhicule automobile est élevée.

EP 0873902 décrit un système et un procédé de commande conformément aux préambules des revendications 1 et 9.

On connaît par le document FR 2-834-034 au nom de la Demanderesse, un dispositif empêchant l'engagement d'un rapport en cas de défaillance du système d'embrayage, lorsque le véhicule est à l'arrêt, au point mort. Dans le cas où le véhicule est à l'arrêt, le moteur fonctionnant, une consigne de commande imposant l'arrêt du moteur est générée. Enfin, lorsque la défaillance survient en marche, le pilotage s'effectue alors « à l'aveugle », sans bénéficier du retour de l'information d'embrayage.

L'invention vise à apporter une solution à ce problème.

L'invention propose un système de commande palliatif d'une boîte de vitesses manuelle dite robotisée à rapports étagés pour véhicule automobile équipé d'un moteur thermique piloté par des moyens de calcul du moteur, la boîte de vitesses comprenant un système d'embrayage commandé hydrauliquement par l'intermédiaire d'un vérin émetteur piloté par des moyens de calcul de transmission, le système de commande comprenant des moyens pour détecter l'existence d'une défaillance de la commande du système d'embrayage.

Selon une caractéristique générale de l'invention, la boîte de vitesses comprend des moyens de synchronisation commandés par les moyens de calcul de transmission couplés aux moyens de calcul du moteur qui, lorsqu'une défaillance est détectée, pilotent le couple moteur de façon à amener le régime moteur au voisinage du régime de synchronisation.

Selon une autre caractéristique générale de l'invention, la boîte de vitesse comprend en outre des moyens d'engagement commandés par les moyens de calcul de transmission, aptes à engager le rapport demandé par le conducteur lorsque le régime moteur est au voisinage du régime de synchronisation après la détection d'une défaillance, les moyens de calcul de transmission maintenant le vérin émetteur dans une position correspondant à la position ouverte du système d'embrayage.

Autrement dit, lorsqu'une défaillance du système d'embrayage est détectée, et que le véhicule automobile se retrouve en roue libre alors que le système d'embrayage est en position fermée, le système de commande palliatif selon l'invention va permettre d'amener le régime moteur au voisinage du régime de synchronisation proportionnel à la vitesse de rotation des roues du véhicule automobile, le système d'embrayage étant maintenu en position ouverte. Lorsque le régime de synchronisation est atteint, le rapport demandé par le conducteur va alors pouvoir être engagé.

De préférence, le système comprend des moyens pour analyser l'état du système d'embrayage lorsque le régime moteur devient égal ou inférieur à une valeur cible prédéterminée, afin d'appliquer une stratégie adaptée pour amener la boîte de vitesses en position neutre.

En d'autres termes, une fois le rapport engagé, celui-ci va être maintenu jusqu'à ce que le véhicule automobile atteigne une vitesse assez faible, pour que la boîte de vitesses puisse passer en position neutre, pour permettre l'arrêt du véhicule automobile.

Selon un autre mode de réalisation de l'invention, les moyens de synchronisation associés aux moyens de calcul de transmission et de moteur sont adaptés pour piloter le couple moteur, lorsqu'une défaillance est détectée, de manière à ce que le régime moteur atteigne une valeur comprise dans une plage de variations prédéterminée par rapport à ladite valeur cible, pour appliquer un effort d'engagement selon une rampe calibrable lorsque le régime moteur se trouve dans ladite plage de variation jusqu'à ce que l'effort d'engagement atteigne une valeur maximale prédéterminée, et pour maintenir l'effort d'engagement à ladite valeur maximale tout en pilotant le couple moteur pour que le régime moteur décroisse selon une consigne de gradient prédéterminée.

Selon un autre mode de réalisation, les moyens de calcul de transmission engagent le rapport demandé par le conducteur lorsque le régime moteur atteint ladite valeur cible.

L'engagement du rapport demandé est rendu possible à la réouverture du système d'embrayage, ainsi que la synchronisation du régime moteur à la vitesse des roues du véhicule automobile.

Selon un autre mode de réalisation de l'invention, les moyens de calcul de transmission bloquent le changement des rapports de vitesses tant que la vitesse du véhicule automobile est supérieure à une vitesse de seuil, en dessous de laquelle la boîte de vitesses passe à la position neutre.

La vitesse de seuil est avantageusement comprise entre 10 et 15 km/h.

Selon un autre mode de réalisation, lorsque le régime moteur décroît jusqu'à devenir inférieur à la limite inférieure de la plage de variations, les moyens de calcul de moteur sont aptes à piloter le couple-moteur pour que le régime moteur augmente selon une consigne de gradient prédéterminée.

Selon un autre mode de réalisation de l'invention, lorsque le rapport n'est pas engagé, la boîte de vitesses peut alors rester à la position neutre jusqu'à l'extinction du moteur du véhicule automobile.

Ainsi, le système prévoit les deux cas de figure, le premier cas, lorsque le rapport demandé par le conducteur est effectivement engagé, et le second cas, où le rapport, du fait d'un problème autre de la boîte de vitesses, n'est pas engagé.

L'invention propose également un procédé de commande palliatif d'une boîte de vitesses manuelle dite robotisée à rapports étagés, pour véhicule automobile équipé d'un moteur thermique piloté par des moyens de calcul du moteur, la boîte de vitesses comprenant un système d'embrayage commandé hydrauliquement par l'intermédiaire d'un vérin émetteur piloté par des moyens de calcul de transmission.

Selon une caractéristique générale de l'invention, on détecte, dans une première étape, une défaillance impliquant simultanément, d'une part, une impossibilité de réengager un rapport, et, d'autre part, le maintien en position fermée du système d'embrayage, puis, dans une deuxième étape, si la vitesse du véhicule automobile est supérieure à un seuil prédéterminé, on pilote le couple moteur pour amener le régime moteur au voisinage du régime de synchronisation et on applique un effort d'engagement du rapport demandé par le conducteur, les moyens de calcul de transmission maintenant le vérin émetteur dans une position correspondant à la position ouverte du système d'embrayage.

Selon un mode de mise en oeuvre de l'invention, dans une troisième étape, on peut analyser l'état du système d'embrayage afin d'appliquer une stratégie adaptée pour amener la boîte de vitesses en position neutre.

D'autres avantages et caractéristiques de l'invention apparaîtront à l'examen de la description détaillée d'un mode de réalisation de l'invention nullement limitatif, et des dessins annexés, sur lesquels :
- la figure 1 représente schématiquement la configuration d'un système d'embrayage comprenant un système de commande palliatif, tel que décrit par l'invention ; et
- la figure 2 représente la variation du régime moteur et de l'effort d'engagement d'après les étapes du procédé selon l'invention.

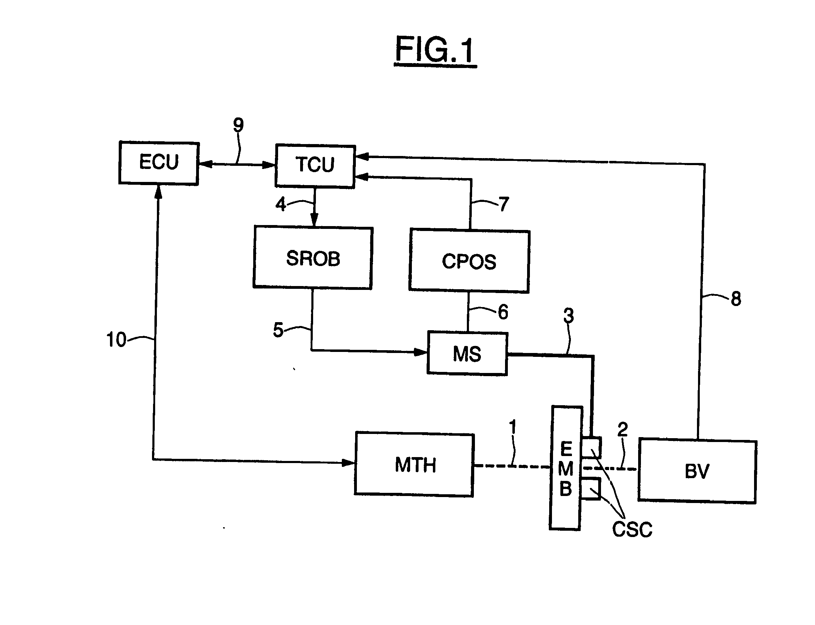

Sur la figure 1, on a représenté schématiquement un système d'embrayage référencé EMB auquel s'applique l'invention. Le système d'embrayage EMB est connecté par une liaison mécanique représentée par une ligne discontinue 1, à un moteur thermique référencé MTH. Le système d'embrayage EMB a pour fonction de transmettre le couple du moteur thermique MTH à une boîte de vitesses référencée BV. La liaison entre le système d'embrayage EMB et la boîte de vitesses BV est une liaison mécanique référencée 2, également appelée arbre primaire. La boîte de vitesses BV est, dans cet exemple, une boîte de vitesses manuelle dite robotisée et pilotée par un système électro-hydraulique ou électro-mécanique qui commande, d'une part, les passages de vitesses de la boîte, c'est-à-dire l'engagement et la sélection des rapports, et, d'autre part, l'embrayage. La boîte de vitesses BV est également relié par l'intermédiaire d'un arbre secondaire (non représenté) aux roues du véhicule automobile afin de leur transmettre le couple moteur grâce à un synchroniseur apte à relier les axes primaire et secondaire.

Le système d'embrayage EMB est commandé hydrauliquement. La consigne de commande est transmise par l'intermédiaire d'une liaison 3, par le déplacement d'un fluide entre un vérin émetteur référencé MS (en langue anglaise, « Master-Slave ») actionné électriquement ou hydrauliquement, et un vérin récepteur appelé encore butée annulaire hydraulique (en langue anglaise, « Concentric Slave Cylinder ») placé au centre de l'embrayage et référencé CSC. Le vérin émetteur CSC a la forme d'un anneau et est représenté en coupe sur cet exemple.

Le vérin émetteur MS est lui-même piloté par des moyens de calcul, par exemple un calculateur (en langue anglaise, « Transmission Control Unit ») référencé TCU. Le calculateur TCU commande un système de robotisation référencé SROB par l'intermédiaire d'une connexion 4. Le système de robotisation SROB élabore alors une consigne de déplacement qu'il transmet par une connexion 5 au vérin émetteur MS. La position du vérin émetteur MS est alors transmise à un capteur de position CPOS par une connexion 6, le capteur de position CPOS étant rebouclé sur le calculateur de transmission TCU par une connexion 7. Ainsi, le contrôle du système d'embrayage EMB est assuré par un asservissement bouclé en position.

En outre, une connexion 8 entre la boîte de vitesses BV et le calculateur de transmission TCU permet de délivrer au calculateur TCU le régime de l'arbre primaire 2 qui connecte le système d'embrayage EMB et la boîte de vitesses BV.

Par ailleurs, le calculateur de transmission TCU est relié à un autre moyen de calcul, par exemple un calculateur du moteur référencé ECU. Les deux calculateurs sont connectés par une liaison 9 qui leur permet d'échanger différentes informations ou commandes. Le calculateur du moteur ECU peut élaborer des consignes de couple-moteur afin de piloter le régime du moteur MTH. Une connexion 10 permet au moteur MTH et au calculateur du moteur ECU d'échanger des informations. Par ailleurs, étant donné que le calculateur de transmission TCU et le calculateur du moteur ECU sont reliés par une connexion 9, le calculateur de transmission TCU peut piloter le régime du moteur par l'intermédiaire d'une requête de régime ou d'un asservissement via des requêtes de couple.

La stratégie de commande palliative selon l'invention peut être chronologiquement divisée en trois parties. Une première partie consiste à détecter une défaillance de la commande d'embrayage EMB. Un exemple classique de défaillance est par exemple une fuite au niveau de la liaison hydraulique entre le vérin émetteur MS et le système d'embrayage EMB, référencé 3 sur la figure 1. Lorsqu'une fuite survient, et que le conducteur décide de changer de rapport, le vérin émetteur MS passe effectivement à la position commandant l'ouverture du système d'embrayage EMB, mais le système d'embrayage reste en position fermée. De ce fait, lorsque le conducteur veut réengager le nouveau rapport, le système d'embrayage EMB étant en position fermée, l'engagement de ce nouveau rapport est alors impossible.

Ainsi, la détection d'une défaillance implique deux conditions simultanées :
- la rapport demandé par le conducteur n'est pas engagé,
- le régime de l'arbre primaire de la boîte de vitesses sont égaux à un seuil près, étant donné que le système d'embrayage ne s'est pas ouvert.

Les défaillances sont détectées grâce à des capteurs (non représentés) placés sur les moyens d'engagement de la boîte de vitesses et sur les arbres 1 et 2.

Lorsque la défaillance est détectée, la stratégie selon l'invention consiste alors à synchroniser la boîte de vitesses BV par le pilotage du régime moteur, d'une part, puis, par l'engagement ou la tentative d'engagement du rapport demandée par le conducteur. En effet, le système d'embrayage étant en position fermée, le moteur MTH et la boîte de vitesses BV sont solidarisés. Le régime du moteur et le régime de l'arbre primaire sont alors identiques. De ce fait, en pilotant le régime moteur, on pilote également le régime de l'arbre primaire, dit régime primaire, de manière à l'amener au régime de synchronisation, c'est-à-dire à la vitesse de rotation de l'arbre secondaire reliant la boîte de vitesses aux roues du véhicule automobile.

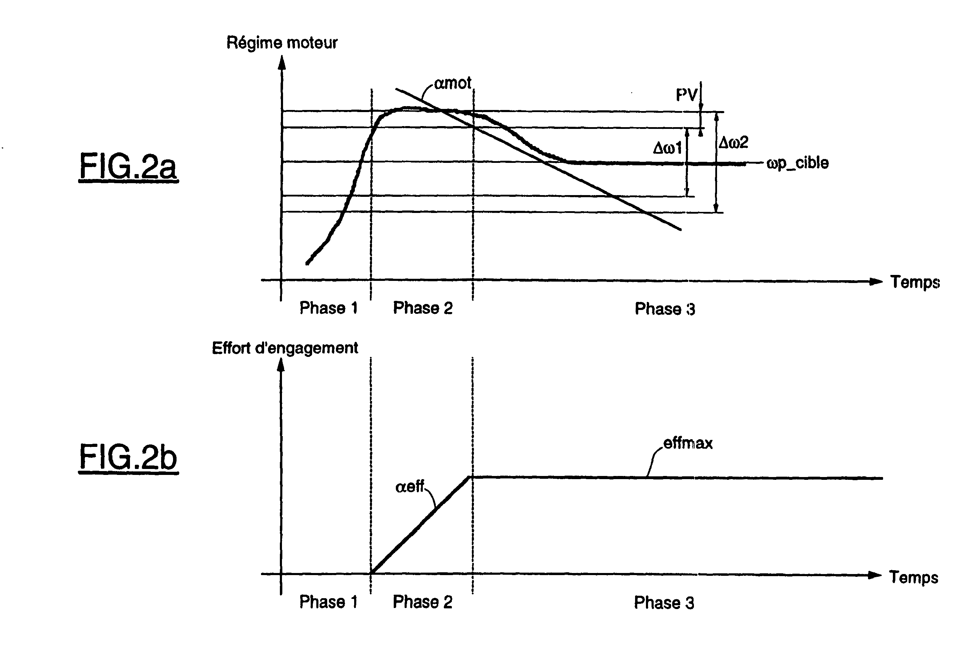

Lorsque le régime de synchronisation est atteint, l'engagement du nouveau rapport de vitesse demandé par le conducteur est possible. Cette étape de synchronisation est décrite plus en détail par la figure 2.

Étant donné que le système d'embrayage est en position fermée, les axes 1 et 2 sont solidarisés. Ainsi, le régime moteur et le régime primaire sont identiques. L'évolution du régime moteur sera donc identique à l'évolution du régime primaire.

Comme décrit ci-avant, l'étape de synchronisation consiste, lorsque les deux conditions du test de défaillance sont satisfaites, et si la vitesse du véhicule automobile est supérieure à un seuil prédéterminé, à faire varier lentement le régime moteur, et donc le régime primaire, au voisinage du régime de synchronisation en pilotant le couple moteur.

Par ailleurs, pendant toute la durée de la phase de synchronisation par le régime moteur, le vérin émetteur MS est maintenu dans une position qui correspond à la position ouverte de l'embrayage.

Comme il est illustré sur la figure 2, la phase de synchronisation se décompose en trois phases. À l'issue de la troisième phase, le régime moteur et le régime primaire doivent atteindre un régime primaire objectif, ωp_cible, calculé à partir de la vitesse du véhicule automobile et du rapport de démultiplication de la boîte de vitesses. Lorsque le régime moteur et le régime primaire sont égaux à ωp_cible, le régime moteur atteint alors le régime de synchronisation autorisant le passage de la nouvelle vitesse.

La phase 1 consiste au pilotage du couple moteur pour que le régime moteur atteigne assez rapidement une valeur compri se dans une plage de variation PV définie par rapport à la valeur ωp_cible. La limite inférieure de la plage de variations PV est égale à ωp_cible + Δω1/2. La limite supérieure de la plage de variations PV est égale à ωp_cible + Δω2/2. Les variables Δω1 et Δω2 sont des écarts de régime servant à définir la plage de variation PV du régime moteur. Ces valeurs sont définies en fonction des caractéristiques de la boîte de vitesses du véhicule automobile.

Une fois que le régime moteur du véhicule automobile se trouve dans la plage de variation PV, le véhicule automobile se trouve alors en phase 2. L'effort d'engagement augmente alors selon une rampe calibrable αeff. Durant cette deuxième phase, on maintient le régime moteur dans la plage de variations PV.

Dès que la rampe d'effort αeff atteint une valeur maximale effmax, le véhicule automobile entre dans la troisième phase de l'étape de synchronisation. La valeur effmax est calibrée de manière à être assez faible afin de ne pas détériorer le synchroniseur de la boîte de vitesses. En effet, le calibrage s'effectue en fonction de l'effort maximum applicable au niveau du synchroniseur. Cependant, on limite la valeur de effmax de 30 à 50% de la capacité maximale du synchroniseur, car l'effort d'engagement est appliqué pour une durée relativement importante. Si sa valeur était supérieure à 50% de l'effort maximal applicable au niveau du synchroniseur, celui-ci serait dégradé.

Durant la troisième phase, le calculateur du moteur pilote le couple moteur pour que le régime moteur décroisse lentement selon une consigne de gradient -αmot. La pente du régime moteur -αmot est calculée en fonction de paramètres liés aux caractéristiques du synchroniseur de la boîte de vitesses, aux rapports de vitesses à engager, ainsi que d'autres paramètres liés au pilotage du moteur.

À l'issue de l'étape de synchronisation, deux cas de figure peuvent se présenter. Dans un premier cas, le rapport demandé par le conducteur s'engage effectivement lorsque le régime primaire est égal au régime de synchronisation. Les changements de rapport sont alors bloqués tant que le véhicule roule à une vitesse supérieure à un seuil. Puis lorsque la vitesse du véhicule devient inférieure à ce seuil, la boîte de vitesses BV passe en position neutre, c'est-à-dire en position roues libres. À titre indicatif, la valeur du seuil de vitesse, qui doit être très faible, est d'environ de 10 à 15 km/h. Cette vitesse relativement faible permet la mise en roues libres du véhicule automobile sans danger. Un voyant lumineux placé par exemple sur le tableau de bord du véhicule automobile s'allume et un défaut du système d'embrayage est alors mémorisé pour le diagnostic en après-vente.

Un deuxième cas de figure est le cas où le rapport de vitesse demandé par le conducteur ne s'engage pas à l'issue de la phase de synchronisation, lorsque le régime moteur est égal à ωp_cible. Le couple moteur est alors piloté de manière à ce que le régime moteur décroît selon un gradient décroissant prédéterminé -αmot.

Lorsque le régime moteur devient inférieur à une borne inférieure BI égale à ωp_cible - Δω1/2, le couple-moteur est alors piloté de façon à ce que le régime moteur augmente lentement selon une consigne de gradient croissant prédéterminée +αmot.

Si le rapport demandé par le conducteur ne s'est pas engagé lorsque le régime moteur dépasse une autre valeur BS égale ωp_cible + Δω1/2, la boîte de vitesses BV est mise en position neutre jusqu'à la coupure du moteur. Un voyant de détection s'allume et un défaut est mémorisé pour le diagnostic. Au démarrage suivant, un test de cohérence de position du système d'embrayage est effectué au neutre et en fonction du résultat un rapport est engagé ou non. Cependant, l'occurrence de ce deuxième cas de figure est très faible et traduit en général la présence d'un autre problème dans la boîte de vitesses. Cependant, il doit être considéré lors de la réalisation du logiciel.

Ainsi, la stratégie présentée ci-dessus permet avantageusement de substituer à la commande du système d'embrayage défaillante, une commande palliative adaptée. Le dispositif de commande palliatif objet de l'invention engage le rapport demandé par le conducteur qui va alors bénéficier du frein-moteur pour pouvoir ralentir puis passer en roue libre avant l'extinction du moteur.

## Revendications

1. Système de commande palliatif d'une boîte de vitesses (BV) manuelle dite robotisée à rapports étagés pour véhicule automobile équipé d'un moteur thermique (MTH) piloté par des moyens de calcul du moteur (ECU), la boîte de vitesses comprenant un système d'embrayage (EMB) commandé hydrauliquement par l'intermédiaire d'un vérin émetteur (MS) piloté par des moyens de calcul de transmission (TCU), le système de commande comprenant des moyens pour détecter l'existence d'une défaillance de la commande du système d'embrayage, **caractérisé par le fait que** la boîte de vitesses (BV) comprend des moyens de synchronisation commandés par les moyens de calcul de transmission (TCU) couplés aux moyens de calcul du moteur (ECU) qui, lorsqu'une défaillance est détectée, pilotent le couple moteur de façon à amener le régime moteur au voisinage du régime de synchronisation, et des moyens d'engagement commandés par les moyens de calcul de transmission (TCU), aptes à engager le rapport demandé par le conducteur lorsque le régime moteur est au voisinage du régime de synchronisation après la détection d'une défaillance, les moyens de calcul de transmission (TCU) maintenant le vérin émetteur (MS) dans une position correspondant à la position ouverte du système d'embrayage (EMB).

2. Système selon la revendication 1, **caractérisé par le fait qu**'il comprend des moyens pour analyser l'état du système d'embrayage lorsque le régime moteur devient égal ou inférieur à une valeur cible prédéterminée (ωp_cible), afin d'appliquer une stratégie adaptée pour amener la boîte de vitesses (BV) en position neutre.

3. Système selon la revendication 2, **caractérisé par le fait que** les moyens de synchronisation associés aux moyens de calcul de transmission (TCU) et de moteur (ECU) sont adaptés pour piloter le couple moteur lorsqu'une défaillance est détectée, de manière à ce que le régime moteur atteigne une valeur comprise dans une plage de variation (PV) prédéterminée par rapport à ladite valeur cible (ωp_cible), pour appliquer un effort d'engagement selon une rampe calibrable (αeff) lorsque le régime moteur se trouve dans ladite plage de variation (PV) jusqu'à ce que l'effort d'engagement atteigne une valeur maximale (effmax) prédéterminée, et pour maintenir l'effort d'engagement à ladite valeur maximale (effmax) tout en pilotant le couple moteur pour que le régime moteur décroisse selon une consigne de gradient prédéterminée (-αmot).

4. Système selon la revendication 3, **caractérisé par le fait que** les moyens de calcul de transmission (TCU) engagent le rapport demandé par le conducteur lorsque le régime moteur atteint ladite valeur cible (ωp_cible).

5. Système selon la revendication 4, **caractérisé par le fait que** les moyens de calcul de transmission (TCU) bloquent le changement des rapports de vitesses tant que la vitesse du véhicule automobile est supérieure à une vitesse de seuil, en dessous de laquelle la boîte de vitesses (BV) passe à la position neutre.

6. Système selon la revendication 5, **caractérisé par le fait que** la vitesse de seuil est comprise entre 10 et 15 km/h.

7. Système selon la revendication 3, **caractérisé par le fait que,** lorsque le régime moteur décroît jusqu'à devenir inférieur à la limite inférieure de la plage de variation (PV), les moyens de calcul de moteur (ECU) sont aptes à piloter le couple moteur pour que le régime moteur augmente selon une consigne de gradient prédéterminée (+αmot).

8. Système selon la revendication 7, **caractérisé par le fait que** lorsque le rapport n'est pas engagé, la boîte de vitesses (BV) reste à la position neutre jusqu'à l'extinction du moteur (MTH) du véhicule automobile.

9. Procédé de commande palliatif d'une boîte de vitesses (BV) manuelle dite robotisée à rapports étagés pour véhicule automobile équipé d'un moteur thermique piloté par des moyens de calcul du moteur (ECU), la boîte de vitesses comprenant un système d'embrayage (EMB) commandé hydrauliquement par l'intermédiaire d'un vérin émetteur (MS) piloté par des moyens de calcul de transmission (TCU), le système de commande comprenant des moyens pour détecter l'existence d'une défaillance de la commande du système d'embrayage (EMB), **caractérisé par le fait que** dans une première étape on détecte une défaillance impliquant simultanément d'une part une impossibilité de réengager un rapport et d'autre part le maintien en position fermée du système d'embrayage (EMB), puis dans une deuxième étape, si la vitesse du véhicule automobile est supérieure à un seuil prédéterminé, on pilote le couple moteur pour amener le régime moteur au voisinage du régime de synchronisation et on applique un effort d'engagement du rapport demandé par le conducteur, les moyens de calcul de transmission (TCU) maintenant le vérin émetteur (MS) dans une position correspondant à la position ouverte du système d'embrayage (EMB).

10. Procédé selon la revendication 9, **caractérisé par le fait que** dans une troisième étape, on analyse l'état du système d'embrayage (EMB) afin d'appliquer une stratégie adaptée pour amener la boîte de vitesses (BV) en position neutre.

## Claims

1. Palliative control system for a manual gearbox (BV) of the so-called robotic staged ratio type for a motor vehicle equipped with a heat engine (MTH) controlled by engine computer means (ECU), the gearbox comprising a clutch system (EMB) operated hydraulically by means of a transmitting actuator (MS) controlled by transmission computer means (TCU), the control system comprising means for detecting the existence of a fault in the operation of the clutch system, **characterized in that** the gearbox (BV) comprises synchronizing means operated by the transmission computer means (TCU) coupled to the engine computer means (ECU) which, when a fault is detected, control the engine torque in such a way as to bring the engine speed into the vicinity of the synchronization speed, and engagement means operated by the transmission computer means (TCU), for engaging the ratio requested by the driver when the engine speed is in the vicinity of the synchronization speed after the detection of a fault, the transmission computer means (TCU) holding the transmitting actuator (MS) in a position corresponding to the open position of the clutch system (EMB).

2. System according to Claim 1, **characterized in that** it comprises means for analysing the state of the clutch system when the engine speed becomes equal to or less than a predetermined target value (ωp_cible), in order to apply a strategy adapted to set the gearbox (BV) to the neutral position.

3. System according to Claim 2, **characterized in that** the synchronization means associated with the transmission computer means (TCU) and engine computer means (ECU) are adapted to control the engine torque when a fault is detected, in such a way that the engine torque reaches a value within a predetermined range of variation (PV) with respect to the said target value (ωp_cible), in order to apply an engagement force according to a ramp which can be calibrated (αeff) when the engine speed is within the said range of variation (PV) until the engagement force reaches a predetermined maximum value (effmax), and in order to keep the engagement force at the said maximum value (effmax) while controlling the engine torque so that the engine speed decreases according to a predetermined gradient setting (-αmot).

4. System according to Claim 3, **characterized in that** the transmission computer means (TCU) engage the ratio requested by the driver when the engine speed reaches the said target value (ωp_cible).

5. System according to Claim 4, **characterized in that** the transmission computer means (TCU) prevent gear changing while the speed of the motor vehicle is above a threshold speed, below which the gearbox (BV) shifts to the neutral position.

6. System according to Claim 5, **characterized in that** the threshold speed is in the range from 10 to 15 km/hr.

7. System according to Claim 3, **characterized in that**, when the engine speed decreases until it becomes lower than the lower limit of the range of variation (PV), the engine computer means (ECU) are capable of controlling the engine torque so that the engine speed increases according to a predetermined gradient setting (+αmot).

8. System according to Claim 7, **characterized in that**, when the ratio is not engaged, the gearbox (BV) remains in the neutral position until the engine (MTH) of the motor vehicle is switched off.

9. Method of palliative control for a manual gearbox (BV) of the so-called robotic staged ratio type for a motor vehicle equipped with a heat engine (MTH) controlled by engine computer means (ECU), the gearbox comprising a clutch system (EMB) operated hydraulically by means of a transmitting actuator (MS) controlled by transmission computer means (TCU), the control system comprising means for detecting the existence of a fault in the operation of the clutch system (EMB), **characterized in that**, in a first stage, a fault is detected which simultaneously implies, on the one hand, the impossibility of re-engaging one ratio, and, on the other hand, the holding of the clutch system (EMB) in the closed position, and then, in a second stage, if the speed of the motor vehicle is above a predetermined threshold, the engine torque is controlled to bring the engine speed into the vicinity of the synchronization speed and a force is applied to engage the ratio requested by the driver, the transmission computer means (TCU) holding the transmitting actuator (MS) in a position corresponding to the open position of the clutch system (EMB).

10. Method according to Claim 9, **characterized in that**, in a third stage, the state of the clutch system (EMB) is analysed in order to apply a strategy adapted to set the gearbox (BV) to the neutral position.

## Patentansprüche

1. Palliatives Steuerungssystem eines Handschaltgetriebes (BV), automatisiertes Stufenschaltgetriebe genannt, für ein Kraftfahrzeug, das mit einem Verbrennungsmotor (MTH) ausgestattet ist, der von Rechenmitteln des Motors (ECU) gesteuert wird, wobei das Schaltgetriebe ein Kupplungssystem (EMB) aufweist, das hydraulisch mittels eines Geberzylinders (MS) gesteuert wird, der von Getriebe-Rechenmitteln (TCU) gesteuert wird, wobei das Steuerungssystem Mittel aufweist, um das Vorhandensein eines Ausfalls der Steuerung des Kupplungssystems zu erfassen, **dadurch gekennzeichnet, dass** das Schaltgetriebe (BV) von den mit den Rechenmitteln des Motors (ECU) gekoppelten Getriebe-Rechenmitteln (TCU) gesteuerte Synchronisationsmittel, die, wenn ein Ausfall erfasst wird, das Motordrehmoment so steuern, dass die Motordrehzahl in die Nähe der Synchronisationsdrehzahl gebracht wird, und von den Getriebe-Rechenmitteln (TCU) gesteuerte Einlegemittel aufweist, die in der Lage sind, den vom Fahrer geforderten Gang einzulegen, wenn die Motordrehzahl sich nach der Erfassung eines Ausfalls in der Nähe der Synchronisationsdrehzahl befindet, wobei die Getriebe-Rechenmittel (TCU) den Geberzylinder (MS) in einer Stellung halten, die der offenen Stellung des Kupplungssystems (EMB) entspricht.

2. System nach Anspruch 1, **dadurch gekennzeichnet, dass** es Mittel aufweist, um den Zustand des Kupplungssystems zu analysieren, wenn die Motordrehzahl gleich einem oder geringer als ein vorbestimmter Zielwert (ωp_Ziel) wird, um eine geeignete Strategie anzuwenden, um das Schaltgetriebe (BV) in die Leerlaufstellung zu bringen.

3. System nach Anspruch 2, **dadurch gekennzeichnet, dass** die den Getriebe- (TCU) und Motor-Rechenmitteln (ECU) zugeordneten Synchronisationsmittel geeignet sind, um, wenn ein Ausfall erfasst wird, das Motordrehmoment derart zu steuern, dass die Motordrehzahl einen Wert erreicht, der in einem vorbestimmten Veränderungsbereich (PV) bezüglich des Zielwerts (ωp_Ziel) liegt, um eine Einlegekraft gemäß einer kalibrierbaren Steigung (αeff) anzuwenden, wenn die Motordrehzahl sich in dem Veränderungsbereich (PV) befindet, bis die Einlegekraft einen vorbestimmten maximalen Wert (effmax) erreicht, und um die Einlegekraft auf dem maximalen Wert (effmax) zu halten und gleichzeitig das Motordrehmoment so zu steuern, dass die Motordrehzahl gemäß einem vorbestimmten Gefälle-Sollwert (-αmot) abnimmt.

4. System nach Anspruch 3, **dadurch gekennzeichnet, dass** die Getriebe-Rechenmittel (TCU) den vom Fahrer geforderten Gang einlegen, wenn die Motordrehzahl den Zielwert (ωp_Ziel) erreicht.

5. System nach Anspruch 4, **dadurch gekennzeichnet, dass** die Getriebe-Rechenmittel (TCU) das Ändern der Gänge blockieren, so lange die Geschwindigkeit des Kraftfahrzeugs höher ist als eine Schwellengeschwindigkeit, unter der das Schaltgetriebe (BV) in den Leerlauf übergeht.

6. System nach Anspruch 5, **dadurch gekennzeichnet, dass** die Schwellengeschwindigkeit zwischen 10 und 15 km/h liegt.

7. System nach Anspruch 3, **dadurch gekennzeichnet, dass**, wenn die Motordrehzahl abnimmt, bis sie unter der Untergrenze des Veränderungsbereichs (PV) liegt, die Motor-Rechenmittel (ECU) in der Lage sind, das Motordrehmoment so zu steuern, dass die Motordrehzahl gemäß einem vorbestimmten Gefälle-Sollwert (+αmot) zunimmt.

8. System nach Anspruch 7, **dadurch gekennzeichnet, dass**, wenn der Gang nicht eingelegt ist, das Schaltgetriebe (BV) bis zum Abschalten des Motors (MTH) des Kraftfahrzeugs in der Leerlaufstellung bleibt.

9. Verfahren zur palliativen Steuerung eines Handschaltgetriebes (BV), automatisiertes Stufenschaltgetriebe genannt, für ein Kraftfahrzeug, das mit einem Verbrennungsmotor ausgestattet ist, der von Rechenmitteln des Motors (ECU) gesteuert wird, wobei das Schaltgetriebe ein Kupplungssystem (EMB) aufweist, das hydraulisch mittels eines Geberzylinders (MS) gesteuert wird, der von Getriebe-Rechenmitteln (TCU) gesteuert wird, wobei das Steuerungssystem Mittel aufweist, um das Vorhandensein eines Ausfalls der Steuerung des Kupplungssystems (EMB) zu erfassen, **dadurch gekennzeichnet, dass** in einem ersten Schritt ein Ausfall erfasst wird, der gleichzeitig einerseits eine Unmöglichkeit des Wiedereinlegens eines Gangs und andererseits den Halt des Kupplungssystems (EMB) in der geschlossenen Stellung impliziert, dann in einem zweiten Schritt, wenn die Geschwindigkeit des Kraftfahrzeugs höher ist als ein vorbestimmter Schwellwert, das Motordrehmoment gesteuert wird, um die Motordrehzahl in die Nähe der Synchronisationsdrehzahl zu bringen, und eine Einlegekraft des vom Fahrer geforderten Gangs angewendet wird, wobei die Getriebe-Rechenmittel (TCU) den Geberzylinder (MS) in einer Stellung halten, der der offenen Stellung des Kupplungssystems (EMB) entspricht.

10. Verfahren nach Anspruch 9, **dadurch gekennzeichnet, dass** in einem dritten Schritt der Zustand des Kupplungssystems (EMB) analysiert wird, um eine geeignete Strategie anzuwenden, um das Schaltgetriebe (BV) in die Leerlaufstellung zu bringen.
